# EUROPÄISCHE PATENTSCHRIFT

(11) **EP 0 770 482 B1**
(45) Veröffentlichungstag und Bekanntmachung des Hinweises auf die Patenterteilung: **18.08.1999**
(21) Anmeldenummer: 96116905.9
(22) Anmeldetag: 21.10.1996
(51) Int. Cl.: B41F 31/15, F16C 33/66

(54) **Lagerung eines Reibzylinders einer Rotationsdruckmaschine**
Bearing of a dancer cylinder of a rotary printing machine
Palier d'un cylindre baladeur d'une machine rotative d'impression

(30) Priorität: 24.10.1995 DE 19539502
(43) Veröffentlichungstag der Anmeldung: 02.05.1997
(73) Patentinhaber: Koenig & Bauer Aktiengesellschaft, 97080 Würzburg (DE)
(72) Erfinder: Mohrmann, Hans Dierk, 97204 Höchberg (DE)

(56) Entgegenhaltungen:
- EP-A- 0 290 091
- EP-A- 0 353 445
- EP-A- 0 363 228
- DE-A- 3 211 715
- DE-A- 3 532 037
- DE-C- 866 745
- FR-A- 2 532 017
- US-A- 4 968 157
- PATENT ABSTRACTS OF JAPAN vol. 12, no. 434 (M-764), 16.November 1988 & JP 63 167126 A (HITACHI LTD.), 11.Juli 1988,

## Beschreibung

Die Erfindung betrifft eine Lagerung eines Zylinders einer Rotationsdruckmaschine gemäß dem Oberbegriff des Anspruchs 1.

Die DE-OS 25 07 178 beschreibt eine gattungsgemäße Lagerung für einen Reibzylinder einer Rotationsdruckmaschine. Diese Lagerung weist eine Ölsammelkammer mit einer Ölrücklaufbohrung auf. Nachteilig an dieser Ölsammelkammer ist, daß sich darin kein zwingend vorgegebener Rücklauf des Öls zur Ölrücklaufbohrung einstellt.

Die DE 44 38 483 A1 offenbart eine Schmierung für Druckzylinderlager. Dabei wird ein Schmiermittel durch einen mit Öffnungen versehenen Außenring des Druckzylinderlagers zugeführt.

Aus der DE 29 51 652 B1 ist eine Lagerung einer Reibwalze bekannt. Bei dieser Lagerung wird eine Abdichtung gegen herausfließendes Öl mittels eines Radialwellendichtringes vorgenommen.

Nachteilig an dieser Vorrichtung ist, daß der Radialwellendichtring Verschleiß unterliegt und somit eine sichere Abdichtung der Lagerung nicht gewährleistet ist.

Der Erfindung liegt die Aufgabe zugrunde, eine flüssigkeitsgeschmierte Lagerung eines Zylinders einer Rotationsdruckmaschine zu schaffen.

Diese Aufgabe wird erfindungsgemäß durch die Merkmale des kennzeichnenden Teiles des Anspruchs 1 gelöst.

In vorteilhafter Weise wird durch die erfindungsgemäße Lagerung eine verschleißfreie Abdichtung der Lagerung beispielsweise eines Reibzylinders in einer Rotationsdruckmaschine erreicht. Durch die Anwendung einer "Minimalmengenschmierung" wird nur eine zur ausreichenden Schmierung benötigten minimale Menge von flüssigem Schmiermittel Z. B. Öl, dem Lager unmittelbar zugeführt. Dadurch fließen nur geringe Mengen von Schmiermittel im Bereich des Lagers, die nur geringe Leckströme verursachen. Die Lagerung ist einseitig mittels einer Sperrwand abgedichtet, die mit dem Zapfen des Reibzylinders einen Ringspalt bildet und somit als Spaltdichtung wirkt. Durch eine der Lagerung nachgeschaltete Kammer zum Auffangen von Leckschmiermittel, werden auch kleinste Leckschmiermittelmengen wieder dem Schmiermittelkreislauf zugeführt. Durch einen sich verjüngenden Querschnitt der Kammer wird dem Schmiermittel eine eindeutige Rückflußrichtung aufgezwungen.
Ein mit dem Reibzylinder rotierender Spritzring löst infolge Fliehkraftwirkung etwaig verbleibendes Schmiermittel vom Zapfen des Reibzylinders ab und schleudert dieses in die Kammer.
Eine von der Lagerung abgewandte Begrenzungswand ist mit einer umlaufenden Ringnut versehen, die gewährleistet, daß auch letzte Reste des Schmiermittels sicher zurückgeführt werden.

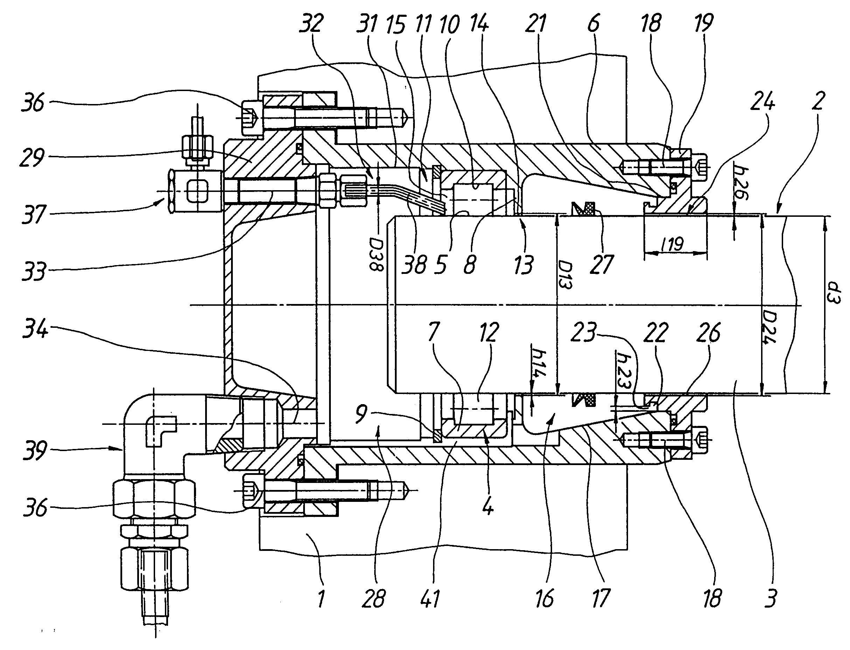

Die erfindungsgemäße Lagerung ist in der Zeichnung dargestellt und wird im folgenden näher beschrieben.

In Seitengestellen 1 einer Rotationsdruckmaschine ist ein Zylinder 2, z. B. ein Reibzylinder 2 beidseitig gelagert. Dieser Reibzylinder 2 dreht beispielsweise mit einer Drehzahl n = 1200 min⁻¹ und führt dabei eine oszillierende Bewegung in axialer Richtung mit einem Hub von beispielsweise ca. +/- 15 mm und einer Frequenz von 2 Hz aus. Eine Lagerung dieses Reibzylinders 2 wird im folgenden an einer Seite beispielhaft beschrieben. Die zugehörige, im zweiten Seitengestell angeordnete Lagerung ist entsprechend ausgeführt.
Ein Zapfen 3 mit einem Durchmesser d3, z. B. d3 = 66 mm, eines Reibzylinders 2 ist mittels eines Lagers 4 - insbesondere mittels eines Wälzlagers -, z. B. eines Zylinderrollenlagers 4, in einer Buchse 6 drehbar und axial verschiebbar gelagert. Ein Außenring 7 des Zylinderrollenlagers 4 ist zwischen einer Sperrwand 8 und einem Sicherungsring 9 in einer Bohrung 11 der Buchse 6 z. B. gestellfest befestigt, während Wälzkörper, z. B. Zylinderrollen 12 des, vorzugsweise gehärteten, Zylinderrollenlagers 4 auf einer direkt auf dem Zapfen 3 ausgebildeten Lauffläche 5 abrollen. Auf dem Zapfen 3 kann auch ein Innenring zur Ausbildung der Lauffläche 5 angebracht sein.
Die Zylinderrollen 12 wälzen also zwischen einer Lauffläche 10 des Außenrings 7 und der mit dem Zapfen 3 verbundenen Lauffläche 5 ab und sind vorzugsweise in axialer Richtung ortsfest angeordnet.
Die an der abzudichtenden Seite des Lagers 4 angeordnete Sperrwand 8 weist eine Bohrung 13 auf, deren Durchmesser D13, z. B. D13 = 66,3 mm, geringfügig größer als der Durchmesser d3 des Zapfens 3 ist, so daß zwischen Sperrwand 8 und Zapfen 3 ein umlaufender Ringspalt 14 mit einer Höhe h14, z. B. h14 = 0,15 mm, gebildet wird. In Richtung des Reibzylinders 2 begrenzt diese Sperrwand 8 in axialer Richtung eine Kammer 16, die in radialer Richtung von einer z. B. konisch verlaufenden Mantelfläche 17 und an der zum Reibzylinder 2 liegenden Seite von einem an der Buchse 6 konzentrisch, mittels Gewindeschrauben 18 befestigten Deckels 19 gebildet wird. Die Kammer 16 weist somit in Richtung eines Ballens des Reibzylinders 2 einen sich verjüngenden Querschnitt auf. Der am verjüngten Ende der Kammer 16 angebrachte Deckel 19 mit einer Länge l19, z. B. l19 = 24 mm, ist an seiner zur Kammer 16 weisenden Seite mit einem einen Absatz 21 aufweisenden Bund versehen, in dessen nach außen liegender Fläche eine in Richtung radialer Mantelfläche 17 der Kammer 16 geöffnete, z. B. U-förmige Ringnut 22 eingebracht ist. Zwischen diesem Absatz 21 und der Mantelfläche 17 der Kammer 16 ergibt sich ein ringförmiger Spalt 23 mit einer Höhe h23, z. B. h23 = 3 mm, so daß die Kammer 16 mit der Ringnut 22 verbunden ist. Der Deckel 19 mit einer Länge l19, z. B. l19 = 24 mm, ist mit einer Bohrung 24 versehen, deren Durchmesser D24, z. B. D24 = 66,3 mm, geringfügig größer ist, als der Durchmesser d3 des Zapfens 3 des Reibzylinders 2. Dadurch ergibt sich ein Ringspalt 26 mit einer Höhe h26, z. B. h26 =0,15 mm und einer Tiefe t26 = l19, z. B. l19 = 24 mm.
In annähernd der Mitte der Kammer 16 ist auf dem Zapfen 3 des Reibzylinders 2 ein mit dem Reibzylinder 2 drehsteif verbundener, rotierender Spritzring 27 vorgesehen. Dieser Spritzring 27 kann - wie im Ausführungsbeispiel dargestellt - als ein aufgeschobener, handelsüblicher V-Dichtring ausgeführt sein oder auch durch mindestens zwei in den Zapfen 3 eingebrachte, nebeneinanderliegende Ringnuten mit kreissegmentförmigen Querschnitt gebildet werden, so daß ein spitz zulaufender Spritzring entsteht. Es ist selbstverständlich auch möglich, mehrere Spritzringe nebeneinander anzuordnen.

Auf der vom Ballen des Reibzylinders 2 wegweisenden Seite des Zylinderrollenlagers 4 ist eine zweite Kammer 28 vorgesehen. Diese Kammer 28 wird in axialer Richtung von dem Zylinderrollenlager 4 bzw. dem Zapfen 3 und einem Deckel 29 sowie in radialer Richtung von einer Mantelfläche 31 einer in die Buchse 6 eingebrachten Bohrung 32 begrenzt. Dieser Deckel 29 ist stirnseitig mit einer ersten 33, oben am Deckel 29 befindlichen und zweiten, 34 unten am Deckel 29 befindlichen durchgehenden Bohrung versehen und stirnseitig an die Buchse 6 mittels Gewindeschrauben 36 angeschraubt. In einem nach außen weisenden Ende der ersten Bohrung 33 ist eine Zuleitung 37 für flüssiges Schmiermittel, z. B. Öl, eingeschraubt. An einem nach innen, zur Kammer führenden Ende ist ein stirnseitig in einen Spalt 15 zwischen beiden Laufflächen 5, 10 des Lagers 4, bis unmittelbar (Abstand z. B. ca. 2 mm) an die Zylinderrollen 12 reichendes Rohr 38 zur gezielten Zuführung von Schmiermittel angebracht. Ein Innendurchmesser D38, z. B. D38 = 4 mm, dieses Rohres 38 ist auf eine definierte, dem Zylinderlager 4 zuzuführenden Menge eines Schmiermittels angepaßt. An die zweite, annähernd in einem tiefsten Bereich der Kammer 28 (dem "Boden" der Kammer 28) mündende Bohrung 34 ist an ihrem nach außen weisenden Ende eine Abflußleitung 39 angeordnet. Von dieser Kammer 28 führt eine Bohrung 41 bzw. Rinne in der Buchse 6 unterhalb des Außenringes 7 des Zylinderrollenlagers 4 zur ersten Kammer 16, so daß erste 16 und zweite 28 Kammer miteinander verbunden sind. Diese Bohrung bzw. Rinne 41 ist derart schräg verlaufend angeordnet, daß sie von einem Boden der ersten 16 zu einem Boden der zweiten 28 Kammer abfallend (mit "Gefälle") verläuft.
Bis auf diese Bohrung 41 ist die Kammer 16 mit den durch sie ragenden Zapfen 3 allseitig geschlossen.

Die Funktionsweise der erfindungsgemäßen Vorrichtung ist folgendermaßen:
Über die Leitung 37 wird das Rohr 38 mit flüssigem Schmiermittel, z. B. Öl, versorgt. Durch das Rohr 38 wird das Schmiermittel dosiert unmittelbar in das Zylinderrollenlager 4 geführt. Die Menge (z. B. V_{zu} = 25 cm³/min) des zugeführten Schmiermittels entspricht einer vom Zylinderrollenlager 4 minimal benötigen Menge Vₘᵢₙ, um eine ausreichende Schmierung des Zylinderrollenlagers 4 zu gewährleisten. Das Schmiermittel wird durch die rotierende und oszillierende Bewegung des Zapfens 3 des Reibzylinders 2 in dem Zylinderrollenlager 4 und auf dem Zapfen 3 gleichmäßig verteilt. Durch diese "Minimalmengenschmierung" gelangt nur wenig Schmiermittel in den Bereich der als Spaltdichtung wirkenden Sperrwand 8. Durch den Ringspalt 14 zwischen Sperrwand 8 und Zapfen 3 wird nur sehr wenig Schmiermittel gefördert. Dieses verbleibende Schmiermittel kann bis zu dem Spritzring 27 fließen. An dem mit dem Reibzylinder 2 schnell drehenden Spritzring 27 wird durch auftretende Fliehkräfte das Schmiermittel an den Rand des Spritzringes 27 gefördert. Der drehende Spritzring 27 schleudert das Schmiermittel in Richtung Mantelfläche 17 der Kammer 16, woran das Schmiermittel jetzt haftet. Durch die verjüngende, konische Form der Kammer 16 wird infolge der Schwerkraft das Schmiermittel in Richtung Boden der Kammer 16 und Zylinderrollenlager 4 zurückbewegt. Erreicht trotzdem noch eine geringe Teilmenge des Schmiermittels das verjüngte Ende der Kammer 16, wird diese infolge der Schwerkraft nach unten fließende Teilmenge von der U-förmigen Ringnut 22 aufgenommen und ebenfalls dem Boden der Kammer 16 zugeführt. Dabei sichert die Ringnut 22 einen Rückfluß entlang des Deckels 19 zu dem Boden der Kammer 16, ohne daß der Zapfen 3 wieder mit Schmiermittel benetzt wird. Der Rückfluß des Schmiermittels gelangt über die Bohrung 41 in die zweite Kammer 28 vor dem Zylinderrollenlager 4. Von dieser Kammer 28 fließt das Schmiermittel in die Abflußleitung 39 und wird von dort wieder einem Schmiermittelkreislauf zugeführt.

### Teileliste

- 1: Seitengestell
- 2: Reibzylinder
- 3: Zapfen (2)
- 4: Lager
- 5: -
- 6: Buchse
- 7: Außenring (4)
- 8: Sperrwand
- 9: Sicherungsring
- 10: -
- 11: Bohrung
- 12: Zylinderrollen (4)
- 13: Bohrung (8)
- 14: Ringspalt
- 15: -
- 16: Kammer, erste
- 17: Mantelfläche (16)
- 18: Gewindeschrauben
- 19: Deckel
- 20: -
- 21: Absatz (19)
- 22: Ringnut (19)
- 23: Spalt
- 24: Bohrung (19)
- 25: -
- 26: Ringspalt
- 27: Spritzring
- 28: Kammer, zweite
- 29: Deckel
- 30: -
- 31: Mantelfläche (32)
- 32: Bohrung (6)
- 33: Bohrung (29)
- 34: Bohrung (29)
- 35: -
- 36: Gewindeschrauben
- 37: Zuleitung
- 38: Rohr
- 39: Abflußleitung
- 40: -
- 41: Bohrung bzw. Rinne
- d3: Durchmesser des Zapfens (3)
- h14: Höhe des Ringspaltes (14)
- l19: Länge des Deckels (19)
- h23: Höhe des Spaltes (23)
- h26: Höhe des Ringspaltes (26)
- t26: Tiefe des Ringspaltes (26)
- D13: Durchmesser der Bohrung (13)
- D24: Durchmesser der Bohrung (24)
- D38: Durchmesser des Rohres (38)

## Patentansprüche

1. Lagerung eines Zylinders (2) einer Rotationsdruckmaschine mit einem flüssigkeitsgeschmierten Lager (4) und mit einer auf der abzudichtenden Seite des Lagers (4) angeordneten Kammer (16) zum Auffangen von Leckagen eines Schmiermittels, dadurch gekennzeichnet, daß die Kammer (16) stirnseitig von einer Sperrwand (8) und einem Deckel (19) begrenzt ist, daß diese Sperrwand (8) und der Deckel (19) jeweils mit dem Zapfen (3) des Zylinders (2) einen Ringspalt (14; 26) von geringer Höhe (h14; h26) bildend angeordnet sind, daß der Deckel (19) eine in Richtung radialer Mantelfläche (17) der Kammer (16) geöffnete Ringnut (22) aufweist.

2. Lagerung nach Anspruch 1, dadurch gekennzeichnet, daß ein Querschnitt der Kammer (16) in axialer Richtung einen verjüngenden Verlauf aufweist.

3. Lagerung nach Anspruch 1, dadurch gekennzeichnet, daß auf dem Zapfen (3) des Zylinders (2) im Bereich der Kammer (16) ein Spritzring (27) drehsteif angeordnet ist.

4. Lagerung nach Anspruch 1, dadurch gekennzeichnet, daß der Zylinder (2) eine drehende und eine in axialer Richtung oszillierende Bewegung ausführend angeordnet ist.

5. Lagerung nach Anspruch 1, dadurch gekennzeichnet, daß eine Schmiermittel zuführende Leitung (37, 38) stirnseitig in einen Spalt (15) zwischen beiden Laufflächen (5; 10) des Lagers (4) unmittelbar an die Wälzkörper (12) des Lagers (4) des Zylinders (2) reichend angeordnet ist.

6. Lagerung nach Anspruch 5, dadurch gekennzeichnet, daß eine dem Lager (4) zuzuführende Menge (V_{zu} ) von Schmiermittel einer minimal vom Lager (4) benötigten Menge (Vₘᵢₙ) von Schmiermittel angepaßt ist.

## Claims

1. Mounting of a cylinder (2) of a rotary printing machine with a liquid-lubricated bearing (4) and with a chamber (16) for catching leakages of a lubricant, arranged on the side of the bearing (4) to be sealed off, characterized in that the chamber (16) is bounded at the end faces by a barrier wall (8) and a cover (19), in that this barrier wall (8) and the cover (19) are arranged respectively with the journal (3) of the cylinder (2) such that they form an annular gap (14; 26) of small height (h14; h26), in that the cover (19) has an annular groove (22), opened in the direction of the radial lateral surface (17) of the chamber (16).

2. Mounting according to Claim 1, characterized in that a cross section of the chamber (16) has a narrowing progression in the axial direction.

3. Mounting according to Claim 1, characterized in that a spraying ring (37) is arranged in a torsionally secure manner on the journal (3) of the cylinder (2) in the region of the chamber (16).

4. Mounting according to Claim 1, characterized in that the cylinder (2) is arranged such that it undergoes a rotating and axially oscillating motion.

5. Mounting according to Claim 1, characterized in that a lubricant-feeding line (37, 38) is arranged at the end face such that it reaches into a gap (15) between the two running surfaces (5; 10) of the bearing (4) right up to the rolling elements (12) of the bearing (4) of the cylinder (2).

6. Mounting according to Claim 5, characterized in that an amount (V_{zu}) of lubricant to be fed to the bearing (4) is adapted to an amount (Vₘᵢₙ) of lubricant minimally required by the bearing (4).

## Revendications

1. Support de cylindre (2) de presse rotative à imprimer comportant un palier (4) lubrifié par liquide et une chambre (16), disposée du côté à rendre étanche du palier (4), destinée à recueillir les fuites de matière lubrifiante, caractérisé en ce que la chambre (16) est délimitée frontalement par une cloison d'arrêt (8) et un couvercle (19), en ce que cette cloison d'arrêt (8) et le couvercle (19) sont disposés de manière à former chacun avec le tourillon (3) du cylindre (2) un passage annulaire (14 ; 26) de faible hauteur (h14 ; h26), en ce que le couvercle (19) présente une rainure annulaire (22) ouverte en direction de la surface d'enveloppe radiale (17) de la chambre (16).

2. Support selon la revendication 1, caractérisé en ce qu'une section transversale de la chambre (16) en direction axiale présente un profil qui s'effile.

3. Support selon la revendication 1, caractérisé en ce qu'une bague de projection (27) est disposée de manière rigide en torsion sur le tourillon (3) du cylindre (2) dans la zone de la chambre (16).

4. Support selon la revendication 1, caractérisé en ce que le cylindre (2) est disposé de manière à effectuer un mouvement rotatif ainsi qu'un mouvement oscillant en direction axiale.

5. Support selon la revendication 1, caractérisé en ce qu'un tuyau (37, 38) amenant de la matière lubrifiante est disposé frontalement dans une fente (15) entre les deux surfaces de roulement (5 ; 10) du palier (4) en allant jusqu'à proximité immédiate des éléments de roulement (12) du palier (4) du cylindre (2).

6. Support selon la revendication 5, caractérisé en ce qu'une quantité (V_{zu}) de matière lubrifiante à amener au palier (4) est conforme à une quantité minimale (Vₘᵢₙ) de matière lubrifiante requise par le palier (4).
